# EUROPEAN PATENT APPLICATION

(11) **EP 0 762 725 A2**
(43) Date of publication of application: **12.03.1997**
(21) Application number: 96114078.7
(22) Date of filing: 03.09.1996
(51) Int. Cl.: H04N 1/32

(54) **Data transmission apparatus**

(30) Priority: 04.09.1995 JP 248251/95
(71) Applicant: FUJI XEROX CO., LTD., Minato-ku, Tokyo (JP)
(72) Inventor: Haga, Toshiaki, Iwatsuki-shi, Saitama (JP)
(74) Representative: Boeters, Hans Dietrich, Dr.

(57) **Abstract**

Data to be transmitted through a facsimile unit can be set via a user I/F section by an input section of an terminal unit such as a personal computer connected to the facsimile unit via a PC interface. That is, document data made by the terminal unit and manuscript data read by a scanner section of the facsimile unit can be set as the transmission data. After this setting operation, a command of start of transmission is given from the input section, and then the document data and the manuscript data are synthesized and sent to other party's facsimile unit via the facsimile unit.

## Description

### BACKGROUND OF THE INVENTION

The present invention relates to a data transmission apparatus, and more particularly relates to a data transmission apparatus comprising a terminal unit such as a personal computer (hereinafter referred to as a pasocon) and a facsimile unit connected to each other.

Various types of transmission systems in which a personal computer and a facsimile unit are connected to each other have been conventionally proposed. One of the systems is disclosed in Japanese Unexamined Patent Publication No. Hei 3-286891. In the above patent publication, the following technique is disclosed. A page printer having the function of facsimile and the function of copying is connected to a host computer. When the document data made by the host computer is transmitted by facsimile, the document data made by the host computer is once sent to the page printer, and then the document data is converted into signals suitable for facsimile communication by a primary controlling section of the page printer and sent out to a telephone line (communication line). As another transmission method, manuscript information is converted into electric signals by an input section of the page printer, and this electric signals are converted into signals suitable for facsimile communication by the primary controlling section and sent out to a telephone line. According to the technique described above, it is possible to transmit by facsimile the printing data sent from the host computer without conducting a printing operation of the data.

Another conventional apparatus is disclosed in Japanese Unexamined Patent Publication No. Hei 3-16363. This conventional apparatus is a composite type facsimile apparatus used under the condition that the apparatus is connected to a host computer. According to this apparatus, the host computer can give not only a command of a facsimile mode but also commands of modes in which the apparatus is operated as a peripheral unit such as a printer or an image scanner. In the facsimile mode, manuscript information read in a manuscript scanning section of the facsimile apparatus is sent out to a telephone line via a codec and a communication control section. In a printer mode, the data made by the host computer is sent to a printing section via a centronics IF and a printer emulator, and then printing is conducted in the printing section. In a remote printer mode, the data made by the host computer is sent to the telephone line via the centronics IF, the printer emulator, the codec and the communication control section. In a scanner mode, manuscript information read by the manuscript scanning section is sent to the host computer via a scanner emulator and an RS-232C IF.

In this connection, Japanese Unexamined Patent Publication No. Hei 5-30238 discloses the same composite type facsimile apparatus as that described above, which is used under the condition that the apparatus is connected to a host computer.

However, in the first conventional apparatus described above, the following problems may be encountered. It is possible to independently transmit by facsimile the document data made by the host computer and the manuscript data made on a sheet of paper. However, when these document and manuscript data are synthesized and transmitted, the document data made by the host computer must be once printed on a sheet of paper, and both of the document and manuscript data must be synthesized on a sheet of paper by means of patching or the like. After that, the thus synthesized data must be read in an input section of the page printer and transmitted. Therefore, the operation property of the first conventional apparatus is low.

In the second conventional apparatus described above, when the data made by the host computer is sent to the telephone line via the centronics IF, the printer emulator, the codec and the communication control section, it is possible to conduct remote printing. However, when the document data made by the host computer and the manuscript data made on a sheet of paper are synthesized and transmitted, it is necessary to employ the same method as that of the first conventional apparatus described above. Therefore, the operation property is also low.

### SUMMARY OF THE INVENTION

The present invention has been made to solve the above problems of the prior art. It is an object of the present invention to provide a data transmission apparatus in which data made in a terminal unit such as a personal computer and data made on a sheet of paper can be easily synthesized and transmitted. It is another object of the present invention to provide a data transmission apparatus in which both of the data can be synthesized and transmitted in an arbitrary order. It is still another object of the present invention to provide a data transmission apparatus in which management information of both of the data that have been synthesized and transmitted can be obtained.

In order to accomplish the above objects, according to the present invention, a data transmission apparatus comprising a facsimile unit having at least a scanner to read manuscript data; and a terminal unit electrically connected to the facsimile unit, wherein document data made by the terminal unit and manuscript data read by the scanner can be transmitted by facsimile, is characterized by comprising: means for designating both the document data made by the terminal unit and the manuscript data read by the facsimile unit as transmission data; means for directing the facsimile unit to read the manuscript data, the directing means being included in the terminal unit; modem means for making a call, negotiation and transmission of both of the document data and the manuscript data in accordance with commands given by the terminal unit; and means for sending both of the document data and the manuscript data to the modem. According to the above data transmission apparatus of the invention, it is possible to transmit the document data made by the terminal unit and the manuscript data read by the facsimile unit can be transmitted by one operation.

The data transmission apparatus of the present invention may be provided with means for arbitrarily setting the order of transmission of the document data made by the terminal unit and the manuscript data read by the facsimile unit. In the data transmission apparatus of the present invention, the input of destination information, the designation of both of the document data and the manuscript data to be transmitted, the setting of the order of transmission and the start of transmitting operation can be conducted on a screen of the terminal unit. Further, in the data transmission apparatus of the present invention, the terminal unit may include means for totally managing management information of the transmitted data.

### BRIEF DESCRIPTION OF THE DRAWINGS

Fig. 1 is a block diagram showing an outline of the arrangement of a terminal unit of an embodiment of the present invention.

Fig. 2 is a block diagram showing an outline of the arrangement of a facsimile unit of an embodiment of the present invention.

Fig. 3 is a block diagram showing a system arrangement of the present invention.

Fig. 4 is an example of a facsimile transmitting screen image shown on the display of the terminal unit.

Fig. 5 is an example of a screen image of facsimile-transmitting/transmitting-file-selection, which is displayed when the file selection is clicked in Fig. 4.

Fig. 6 is an example of a screen image of facsimile-transmitting/comment, which is displayed when the comment column is clicked in Fig. 4.

Fig. 7 is a flow chart showing a setting operation of facsimile transmission of an embodiment of the present invention.

Fig. 8 is a flow chart showing a transmitting operation of facsimile of an embodiment of the present invention.

Fig. 9 is a view showing an example of communication managing information of an embodiment of the present invention.

Fig. 10 is a flow chart showing a facsimile transmitting operation of a second embodiment of the present invention.

Fig. 11 is a flow chart showing a facsimile transmitting operation of a third embodiment of the present invention.

### DETAILED DESCRIPTION OF THE INVENTION

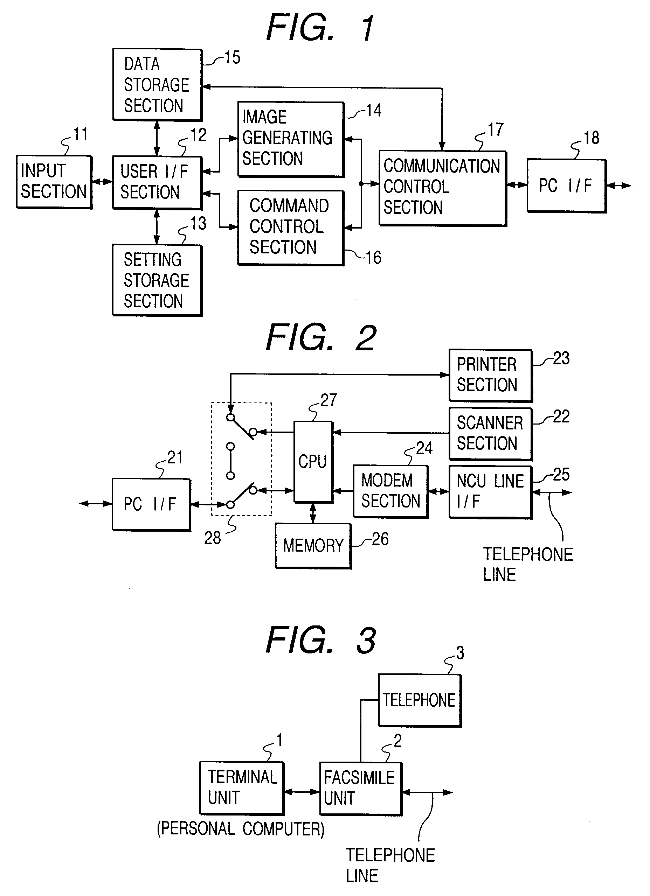

Referring to the accompanying drawings, the present invention will be explained in detail. Fig. 3 is a block diagram showing the system arrangement of an embodiment of the present invention. As shown in the drawing, a terminal unit 1 such as a personal computer is connected to a facsimile unit 2. The terminal unit 1 can be operated so as to make a call to a facsimile unit of other party via a telephone line. On the other hand, operation keys of the facsimile unit 2 include only a start key and a stop key. Accordingly, when manuscript information read by the scanner of the facsimile unit 2 is transmitted by facsimile, it is impossible to make a call to the other party from the facsimile unit 2. Therefore, the facsimile unit 2 is connected to an external telephone 3, which is used to make a call to the other party.

Next, referring to Fig. 1, an outline of the arrangement of the terminal unit 1 will be explained. An input section 11 corresponds to a key board or a mouse attached to a personal computer. A user I/F section 12 is an application section, which corresponds to various application programs to provide a user interface, for example, the user I/F section 12 corresponds to a program to set functions of the facsimile unit 2 or a program of a Japanese word processor. A setting storage section 13 stores setting data inputted by a user, for example, a telephone number for facsimile of other party, a name of the other party, and header information. An image generating section 14 converts document data made by the user I/F section 12 into image data. A data storage section 15 stores the image data described before and communication management information described later. A command control section 16 outputs various commands in accordance with an operation of the user I/F section 12. A communication control section 17 controls the communication conducted between the terminal unit 1 and the facsimile unit 2. That is, the communication control section 17 controls the communication to transmit and receive facsimile data, status/command and the like between the terminal unit 1 and the facsimile unit 2. A PC I/F 18 is an interface to connect the terminal unit 1 to the facsimile unit 2.

Next, referring to Fig. 2, an outline of the arrangement of the facsimile unit 2 will be explained. In the facsimile unit 2, the function of facsimile is added to a conventional printer. A PC I/F 21 is an interface to connect the facsimile unit 2 to the terminal unit 1. A data control section 28 controls a flow of data according to whether the facsimile transmission is conducted by the terminal unit 1 or by the facsimile unit 2. A scanner section 22 converts manuscript information written on a sheet of paper into electronic information. A printer section 23 prints out the data that has been sent to it, so that the data is converted into visible information. A modem section 24 is a facsimile communication modem, which makes a call to the other party and carries out a protocol procedure necessary for facsimile communication. An NCU line I/F 25 is an interface provided between the facsimile unit 2 and a telephone line network. A memory 26 stores facsimile communication information etc. A CPU 27 controls the communication to transmit and receive the facsimile data, the status/command and the like between the terminal unit 1 and the Facsimile unit 2.

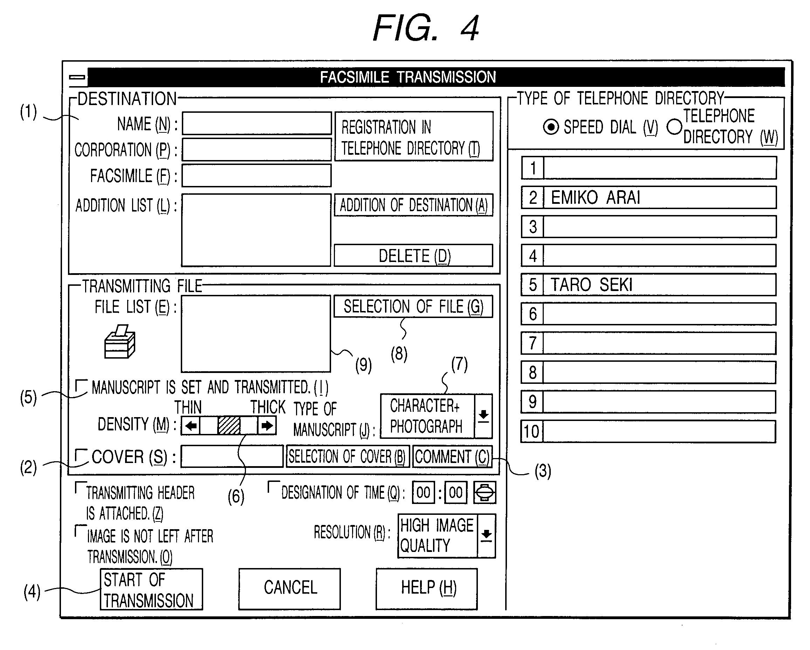

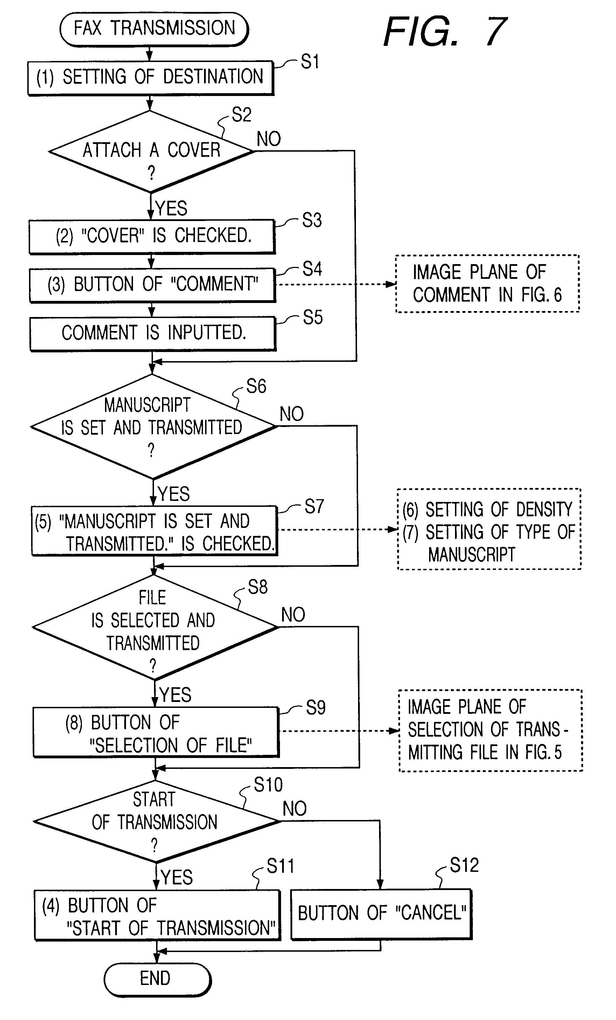

Next, referring to a screen image displayed by the user I/F section 12 of the terminal unit 1 and also referring to a flow chart, the operation of an embodiment of the present invention will be explained. Fig. 4 is a screen image displayed when the facsimile transmission is selected. Fig. 7 is a flow chart to explain the operation in the case of facsimile transmission.

In step S1, an operator sets "Destination" ① on the screen image. Destination data, which have already been registered in a telephone book in the right column on the screen image, can be transferred into this column of destination. In the case of a new destination, after the destination has been inputted into the destination column, it can be registered in the telephone book. It is possible to designate not only one destination but also a plurality of destinations. In step S2, it is judged whether a manuscript to be transmitted is covered or not. When the manuscript to be transmitted is covered, "Cover" ② on the screen image is clicked with a mouse in step S3. A plurality of types of covers have been prepared. Therefore, the user can select the most preferable one. Next, when a button of "Comment" ③ on the screen image is clicked in step S4, the comment screen image shown in Fig. 6 appears. In step S5, a desired message is written in the comment column.

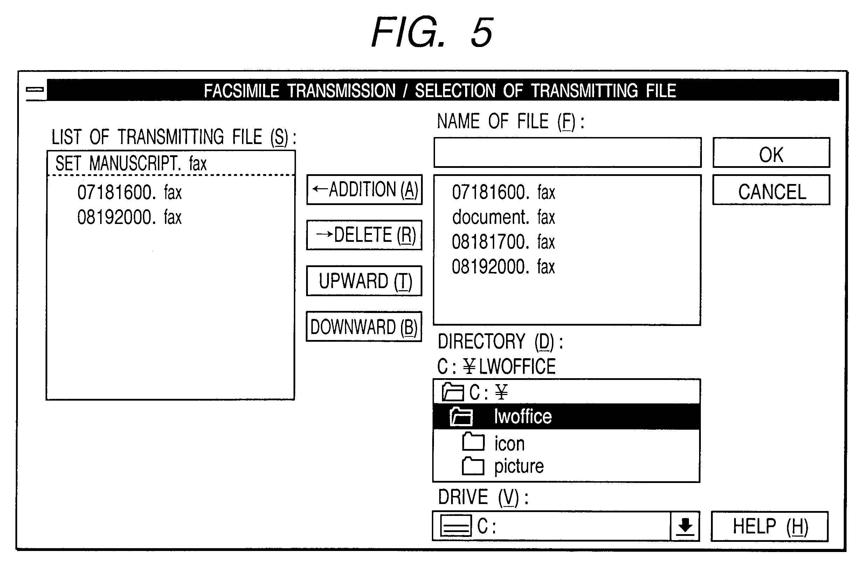

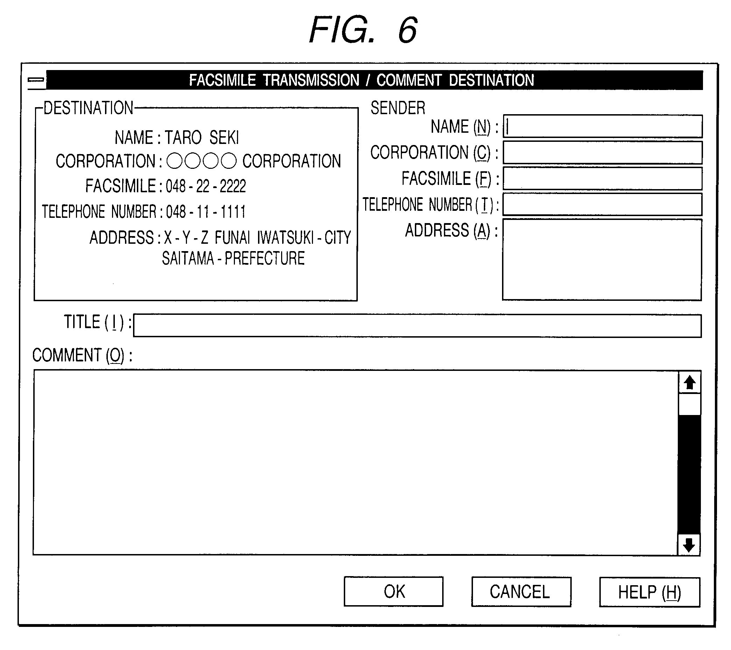

In step S6, a manuscript is set in the scanner section 22 (shown in Fig. 2) of the facsimile unit 2, and it is judged whether manuscript information is transmitted or not. When this judgment is affirmative, the column of "Manuscript is set and transmitted" ⑤ on the screen image in Fig. 5 is clicked. At this time, the density is set by ⑥ on the screen image, and the manuscript type is set by ⑦ on the screen image. For example, when the manuscript density is low, the high density is designated. Further, the setting is conducted according to the type of the manuscript which contains only characters or contains both characters and photographs. In column ⑨ of transmitting file column, a message of "Set manuscript. fax" is displayed.

In step S8, it is judged whether or not a file in the terminal unit 1, that is, a file made by the personal computer or a file stored in the personal computer is selected and transmitted. When this judgment is affirmative, "selection of file" ⑧ is clicked. Then the displayed screen image is changed to a transmitted file selecting screen image shown in Fig. 5. In "File name (F)" shown on the transmitted file selecting screen image, all file names stored in the personal computer are displayed. Therefore, a predetermined file to be transmitted can he selected from the stored files. The selected file name is registered in "Transmitted file list (S)" on the left of the displayed screen image. In the column of "Transmitted file list (S)" in Fig. 5, there are registered "Set manuscript. fax", "07181600. fax" and "08192000. fax". In this case, "Set manuscript. fax" is registered in step S7 described before, and "07181600. fax" and "08192000. fax" are registered in step S9. It is possible to change the order of registration by operating keys of "Upward" and "Downward". When an OK button in Fig. 5 is clicked, the screen image returns to the one shown in Fig. 4.

In step S10, it is judged whether or not the start of transmission is carried out. When this judgment is affirmative, the program advances to step S11, and the button of "Start of transmission" ④ on the screen image is clicked. On the other hand, when the start of transmission is not carried out, the program advances to step S12, and the button of "Cancel" is clicked. Due to the above setting operation, the setting of facsimile transmission on the displayed screen image is completed.

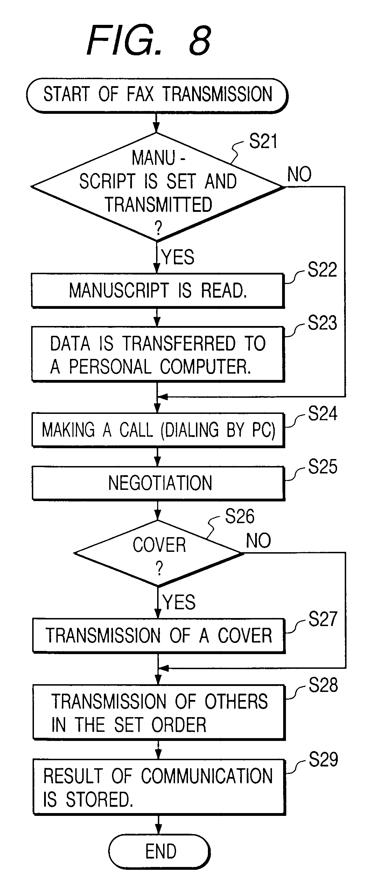

Next, referring to the flow chart shown in Fig. 8, the operation will be explained when the button of "Start of transmission" is clicked in step S11. In step S21 shown in Fig. 8, it is judged whether or not a direction to set and transmit a manuscript is given. When this judgment is affirmative, the program advances to step S22, and the scanner section of the facsimile unit 2 conducts a reading motion to read the manuscript. At this time, a command to direct the motion is outputted from the command control section 16 in the terminal unit 1. This command is sent to the CPU 27 via the communication control section 17, PC I/Fs 18, 21 and the data control section 28. Then the CPU 27 directs the scanner section 22 to read the manuscript.

In step 23, the data that has been read, is transferred to the terminal unit 1 by the CPU 27. The data transmitted to the terminal unit 1 is sent from the communication control section 17 to the data storage section 15 and stored in the data storage section 15.

Next, in step S24, the terminal unit 1 notifies the modem section 24 in the facsimile unit 2 of the facsimile number which has been set in the destination column so that this number can be dialed. In this way, the modem section 24 makes a call to the destination. In step S25, when the line is connected to the other party, the modem section 24 conducts an operation of communication of protocol with the other party's unit. After the condition of communication with other party's unit has been confirmed by this protocol communication, the program advances to step S26, and it is judged whether or not a cover is transmitted. When it is set in step S3 that the cover is to be sent, the program advances to step S27, and the cover is transmitted. Next, in step S28, transmission operation is conducted in the order finally registered in the column of "Transmitting file list (S)" shown in "Fig. 5.

The cover and other data are stored in the data storage section 15 of the terminal unit 1 in the form of an image. The cover and other data are successively sent from the data storage section 15 to the modes section 24 of the facsimile unit 2 via the communication control section 17. The modem section 24 conducts an operation of facsimile communication in accordance with the condition that has been confirmed by the negotiation in step S25. For example, facsimile communication is conducted by the confirmed compressing system and the communication speed. While the cover and other data are being transmitted, data is sent from the terminal unit 1 to the facsimile unit 2. On the contrary, status data is returned from the facsimile unit 2 to the terminal unit 1.

In step S29, the result of communication is stored in the data storage section 15 of the terminal unit 1. That is, since the status data is returned from the facsimile unit 2 to the terminal unit 1, the terminal unit 1 can know the result of communication, for example, whether the transmission has been completed normally or abnormally. Therefore, the result of communication is stored in the data storage section 15 of the terminal unit 1 in the form of communication management information. The image transmission data, which has already been transmitted, is also stored in the data storage section 15 in conjunction with the communication management information.

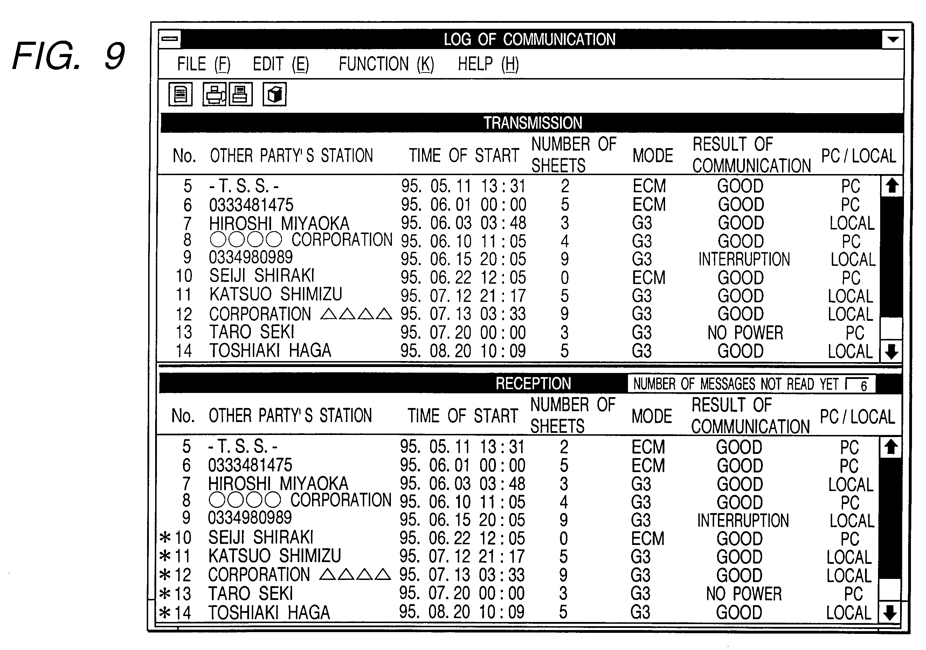

An example of the communication management information is shown in Fig. 9. In the communication management information, there are provided columns of other party's name, start time, number of sheets, mode, result of communication, and PC/local. The PC/local represents whether the transmission or reception in facsimile was conducted by the terminal unit (PC) 1 or the facsimile unit 2. Since the image data is stored in conjunction with the communication management information, when the user clicks one of the pieces of communication management information, it is possible to display the corresponding image data on the screen image.

As described above, according to this embodiment, by the simple operation, the information of the manuscript which was set in step S7, that is, the manuscript information read by the scanner section 22 of the facsimile unit 2 is synthesized with the data of the file which were set in step 59, and the thus synthesized data can be transmitted in step S28.

The order of synthesis can be simply changed when the name of a file in "Transmitting file. list (S)" on the displayed screen image in Fig. 5 is designated and then the button of "Upward" or "Downward" is operated. Due to the foregoing, it is possible to transmit the manuscript information which has been read by the scanner section 22 of the facsimile unit 2, and the file data in an arbitrary order.

Communication management information can be formed by the terminal unit 1. Not only the information about the data transmitted from the terminal unit 1 but also the information about the manuscript information read by and transmitted from the scanner section 22 of the facsimile unit 2 can be contained in the communication management information.

When the order of transmission of the manuscript information is the second or after the second, and the reading operation is delayed, there is a possibility of occurrence of an error in the communication protocol. However, in this embodiment, the manuscript information is read by the facsimile unit 2 before making a call. Accordingly, there is no possibility of occurrence of the above problem in this embodiment. Even when a manuscript sheet is jammed in the process of reading the manuscript information, there is no possibility of interruption of communication, because the occurrence of jam is before making a call. Accordingly, there is no possibility of a failure in communication.

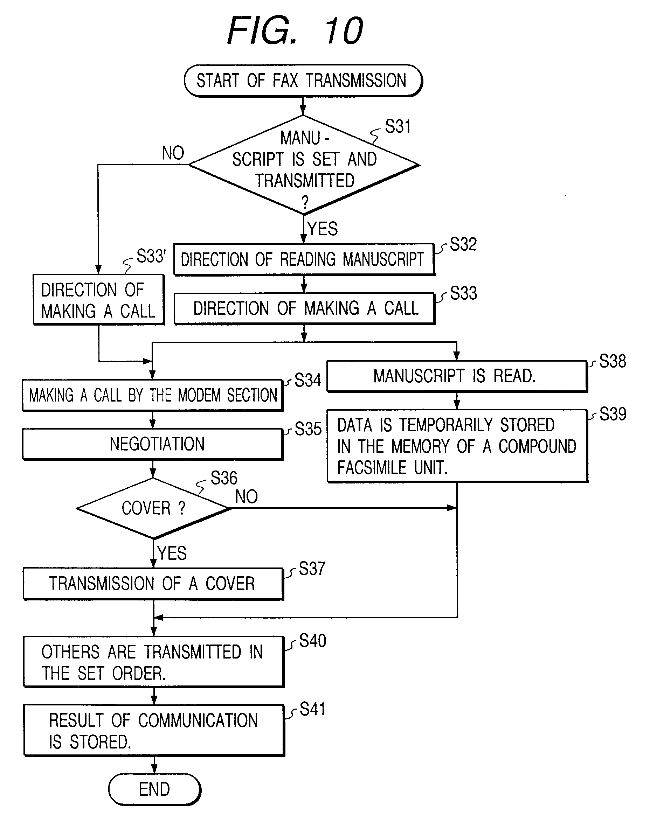

Next, referring to Fig. 10, a second embodiment of the present invention will be explained. In the embodiment described before, as shown in steps S21 to S27, the manuscript is read first, and then operation of making a call is conducted and the cover is transmitted. Therefore, it takes time in steps S21 to S27. An object of the second embodiment is to reduce this time.

After "Start of transmission" is directed in step S11, it is judged in step S31 shown in Fig. 10 whether or not the manuscript is set and transmitted. When this judgment is affirmative, it is directed by the terminal unit 1 in step S32 for the facsimile unit 2 to read the manuscript. Next, in step S33, the terminal unit 1 directs the facsimile unit 2 to make a call. In this connection, when the judgment conducted in step S31 is negative, it is directed in step S33' to make a call in the same manner as that of step S33.

After the direction of making a call has been conducted in step S33, the operation of steps S34 to S37 and the operation of steps S38 and S39 are conducted in parallel by the facsimile unit 2. That is, dialing is conducted by the modem section 24 in step S34, and when the unit is connected to the other party's unit via a telephone line, negotiation is conducted by the modem section 24 in step S35. In step S36, it is judged whether or not there is a cover. When there is a cover, the program advances to step S37, and the cover is transmitted. In step S38, the scanner section 22 reads the manuscript in parallel with the above operation. In step S39, the manuscript data which has been read is stored in the memory 26 of the facsimile unit 2.

In step S40, data is transmitted in the order that have been set on the screen image of transmitting file selection shown in Fig. 5. Accordingly, when the order of a transmitted file is before the order of a set manuscript, the file on the terminal unit 1 is first transmitted. After the completion of transmission of the file, the manuscript information stored in the memory 26 of the facsimile unit 2 is transmitted. In step S41, the result of communication is stored. At this time, in order to link the communication management information with the transmitted image, the information of the set manuscript is transferred from the memory 26 of the facsimile unit 2 to the data storage section 15 of the terminal unit 1. In this connection, this transfer operation may be conducted while the information of the set manuscript is being transmitted by facsimile. That is, the information of the set manuscript may be transferred to the data storage section 15 in parallel with the transfer of the information of the set manuscript to the modem 23.

According to this, embodiment, when the set manuscript is transmitted by facsimile, it is possible to conduct the operation of making a call and the operation of reading data by the scanner in parallel. Therefore, it is possible to reduce the time required for the facsimile transmission.

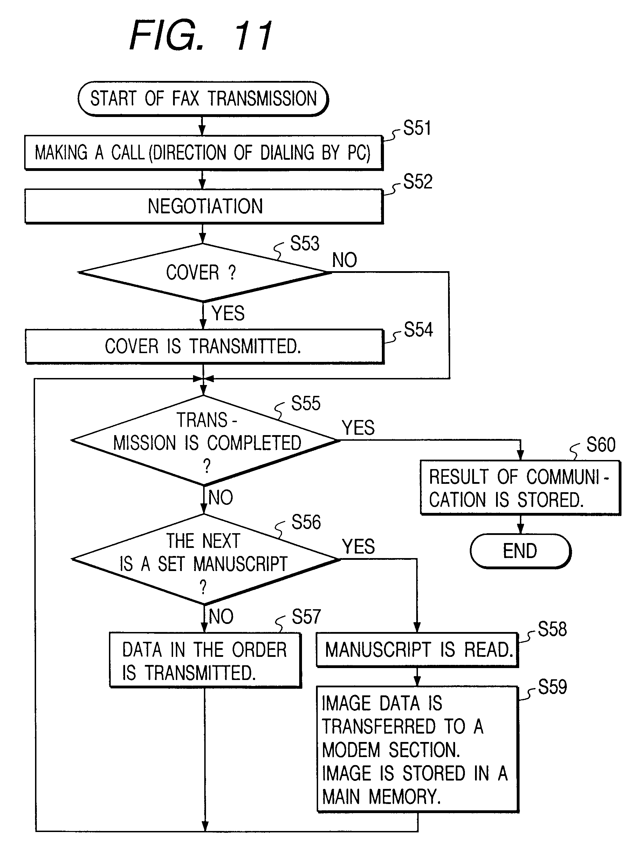

Next, referring to a flow chart shown in Fig. 11, a third embodiment of the present invention will be explained. In the first embodiment described before, the set manuscript is read before making a call. On the other hand, in the third embodiment, the set manuscript is read after making a call.

When the start of transmission is directed in stop S11, the terminal unit 1 directs the facsimile unit 2 to make a call in step S51. In response to that, the modem section 24 of the facsimile unit 2 conducts dialing. After the facsimile unit 2 has been connected to other party's unit via a telephone line, negotiation is conducted in step S52. In step S53, it is judged whether or not a cover is transmitted. When this judgment is affirmative, the program advances to step S54, and data of the cover is transmitted.

Next, in step S55, it is judged whether or not the transmission of all data has been completed. When this judgment is negative, the program advances to step S56, and it is judged whether or not next transmitting data is data of the set manuscript. When this judgment is negative, the program advances to step S57. In step S57, data of a file is transmitted in the order that has been set on the transmitting file selecting screen image shown in Fig. 5. On the other hand, when the judgment conducted in step S56 is affirmative, the program advances to step S58, and the set manuscript is read by the scanner section 22. Next, the program advances to step S59, and the image data of the set manuscript is transferred to the modem section 24. The image data of the set manuscript is stored in the memory 26.

When the judgment conducted in step S55 is affirmative after the completion of transmission described above,the program advances to step S60,and the result of communication is stored in the data storage section 15 of the terminal unit 1. At this time, the data of the set manuscript is transferred from the memory 26 of the facsimile unit 2 to the data storage section 15 of the terminal unit 1. In this connection, this transfer operation may be conducted in parallel while the data of the set manuscript is being transferred to the modem section 24 in step S59.

In each embodiment described above, the cover is first transmitted. However, the present invention is not limited to the specific embodiment, but the cover may not be transmitted first, and the set manuscript or the file data may be transmitted before the cover. In this connection, this cover is not necessarily transmitted.

As can be seen in the above explanations, according to the present invention, both the document data made by the terminal unit and the manuscript data read by the facsimile unit can be designated as the transmitting data. Accordingly, both of the document data and the manuscript data can be transmitted together by one operation. Further, the order of transmission of both of the document data and the manuscript data can be arbitrarily set. Still further, on the screen image of the terminal unit, it is possible to input the information of a destination, to designate both of the document data and the manuscript data to be transmitted, to set the order of transmission, and to start the transmitting operation. Accordingly, the operation property is very high. Still further, even in the case of occurrence of jam of manuscript sheets in the process of reading manuscript information, it is possible to avoid interruption of facsimile communication. Accordingly, there is no possibility of failure in transmission. Still further, it is possible to reduce the time necessary for the communication of facsimile. Still further, all transmitted data including the manuscript data that have been read by the facsimile unit can be totally managed by the terminal unit. Accordingly, the information can be accurately managed. Still further, a user can easily read the image information in the management information. Consequently, the contents of communication data can be easily confirmed.

## Claims

1. A data transmission apparatus comprising:
a modem connected to a communication line;
a terminal unit electrically connected to the modem;
memory means provided in the terminal unit and for storing image data;
a scanner for reading manuscript data;
setting means for setting both of the manuscript data read by the scanner and the image data stored in the memory means as transmission data; and
control means for controlling a transmission operation of the transmission data set by the setting means.

2. The data transmission apparatus according to claim 1, wherein the setting means sets order of transmission of the transmission data.

3. The data transmission apparatus according to claim 2, wherein the setting means sets information of a destination to, which the transmission data is transmitted, and the setting means and the control means are provided in the terminal unit.

4. The data transmission apparatus according to claim 1, wherein the scanner reads the manuscript data before the modem makes a call to a destination to which the transmission data is transmitted.

5. The data transmission apparatus according to claim 1, wherein the scanner reads the manuscript data while the modem makes a call to a destination to which the transmission data is transmitted.

6. The data transmission apparatus according to claim 1, wherein the terminal unit includes storage means for storing transmission information of the transmission data.

7. The data transmission apparatus according to claim 6, further comprising means for displaying the transmission data corresponding to the transmission information stored in the storage means.

8. A data transmission apparatus comprising:
a modem connected to a communication line;
a facsimile unit including the modem;
a terminal unit electrically connected to the facsimile unit;
memory means provided in the terminal unit and for storing image data;
a scanner provided in the facsimile unit and for reading manuscript data;
setting means for setting both of the manuscript data read by the scanner and the image data stored in the memory means as transmission data; and
control means for controlling a transmission operation of the transmission data set by the setting means.

9. The data transmission apparatus according to claim 8, wherein the setting means sets order of transmission of the transmission data.

10. The data transmission apparatus according to claim 9, wherein the setting means sets information of a destination to which the transmission data is transmitted, and the setting means and the control means are provided in the terminal unit.

11. The data transmission apparatus according to claim 8, wherein the scanner reads the manuscript data before the modem makes a call to a destination to which the transmission data is transmitted.

12. The data transmission apparatus according to claim 8, wherein the scanner reads the manuscript data while the modem makes a call to a destination to which the transmission data is transmitted.

13. The data transmission apparatus according to claim 8, wherein the terminal unit includes storage means for storing transmission information of the transmission data.

14. The data transmission apparatus according to claim 13, further comprising means for displaying the transmission data corresponding to the transmission information stored in the storage means.

15. A data transmission apparatus comprising:
a modem connected to a communication line;
a terminal unit including the modem;
a facsimile unit electrically connected to the terminal unit;
memory means provided in the terminal unit and for storing image data;
a scanner provided in the facsimile unit and for reading manuscript data;
setting means for setting both of the manuscript data read by the scanner and the image data stored in the memory means as transmission data; and
control means for controlling a transmission operation of the transmission data sat by the setting means.
